# EUROPÄISCHE PATENTSCHRIFT

(11) **EP 1 488 975 B1**
(45) Veröffentlichungstag und Bekanntmachung des Hinweises auf die Patenterteilung: **15.08.2007**
(21) Anmeldenummer: 04102197.3
(22) Anmeldetag: 18.05.2004
(51) Int. Cl.: B60T 8/36, F04D 29/60, F04D 29/66, F04B 39/00, F16F 15/08, F16L 55/035

(54) **Hydraulisches Aggregat**
Hydraulic unit
Unité hydraulique

(30) Priorität: 16.06.2003 DE 10326913
(43) Veröffentlichungstag der Anmeldung: 22.12.2004
(73) Patentinhaber: ROBERT BOSCH GMBH, 70442 Stuttgart (DE)
(72) Erfinder: Huber, Siegfried, 74072, Heilbronn (DE)

(56) Entgegenhaltungen:
- EP-A- 0 890 778
- DE-A- 3 025 601
- US-A- 4 569 637
- US-A1- 2002 190 572
- US-B1- 6 216 734
- PATENT ABSTRACTS OF JAPAN Bd. 1995, Nr. 05, 30. Juni 1995 (1995-06-30) -& JP 07 033005 A (TOYOTA MOTOR CORP), 3. Februar 1995 (1995-02-03)

## Beschreibung

### Stand der Technik

Die vorliegende Erfindung betrifft ein hydraulisches Aggregat.
Bei Kraftfahrzeugen werden derartige hydraulische Aggregate beispielsweise in Bremsanlagen, Stabilitätssystemen oder Traktionssystemen verwendet. Die Hydraulikaggregate sind in der Regel kompakte Bauelemente, welche eine Pumpe, einen elektrischen Antrieb, Ventile, usw. umfassen. Durch den Betrieb derartiger Hydraulikaggregate entstehen jedoch Schwingungen und Körperschall, welcher beispielsweise über eine Halterung, mit welcher das Hydraulikaggregat am Fahrzeug befestigt ist, auf andere Bauteile des Fahrzeugs übertragen wird. Ein Körperschall, welcher jedoch auf andere Fahrzeugbauteile übertragen wird, macht sich als Geräusch, sowohl innerhalb als auch außerhalb des Fahrzeugs bemerkbar. Weiterhin kann der Körperschall auch über die am Hydraulikaggregat vorhandenen Anschlüsse und Leitungen übertragen werden. Da bei heutigen Fahrzeugen die Anforderungen hinsichtlich der Geräuschemission immer größer werden, muss insbesondere eine Übertragung des Körperschalls in den Fahrzeuginnenraum verhindert werden, um keinen negativen Eindruck bei den Benutzern des Fahrzeugs zu hinterlassen.

Ein hydraulisches Aggregat für ein Antiblockiersystem entsprechend den Merkmalen des Oberbegriffs des Anspruchs 1 ist beispielsweise bekannt aus der JP 7 033005 A. Dieses hydraulische Aggregat ist mittelbar über Leitungen, die dem hydraulischen Aggregat Druckmittel zuführen oder Druckmittel vom hydraulischen Aggregat wegführen an einer fahrzeugseitig verankerten Halterung befestigt. Diese Befestigung erfolgt durch elastische Elemente, welche die Leitungen umgeben. Zur Kontaktierung der Leitungen mit dem hydraulischen Aggregat sind Anschlussstutzen vorhanden. Diese Anschlussstutzen sind jedoch nicht vom elastischen Element umgeben. Zwischen den elastischen Elementen und dem hydraulischen Aggregat besteht ein räumlicher Abstand.

Das in der US 2002/190572 A1 beschriebene Bremsaggregat ist durch mindestens zwei elastische Lagerelemente an einer fahrzeugseitigen Halterung befestigt. Die elastischen Lagerelemente liegen am Gehäuse des hydraulischen Aggregats an, sind aber abseits der hydraulischen Anschlüsse des Bremsaggregats platziert und umgeben diese Anschlüsse nicht.

Schließlich sind aus der US 6,216,734 B1 und aus der US 4,569,637 A nachgiebige Aufhängungsvorrichtungen für elektromotorisch angetriebene Kraftstoffversorgungseinrichtungen bekannt.

### Vorteile der Erfindung

Das erfindungsgemäße hydraulische Aggregat mit den Merkmalen des Anspruchs 1 hat demgegenüber den Vorteil, dass mittels eines elastischen Elements eine Dämpfung von Schwingungen des hydraulischen Aggregats, insbesondere eine Dämpfung von Körperschall, ausgeführt wird. Hierbei ist das elastische Element an einem Anschlussstutzen des hydraulischen Aggregats angeordnet. Eine Halterung zur Befestigung des hydraulischen Aggregats an dem Fahrzeug ist dabei am elastischen Element befestigt.
Nachfolgend wird auch der Begriff Leitungsanschlusselement des hydraulischen Aggregats - gebraucht. Hierunter wird der Anschlussstutzen verstanden, welcher aus dem hydraulischen Aggregat vorsteht, als auch daran angeordnete Befestigungselemente zur Befestigung der Leitungen an den Anschlussstutzen, wie z.B. Überwurfschrauben usw.
Somit ermöglicht das erfindungsgemäße elastische Element eine Dämpfung von Schwingungen, welche über die Halterung an das Fahrzeug abgegeben werden könnten, als auch von Schwingungen, welche über die Leitungen an das Fahrzeug abgegeben werden können. Somit kann erfindungsgemäß durch Verwendung nur eines elastischen Elements eine Dämpfung von Schwingungen erreicht werden und eine Übertragung auf andere Bauteile verhindert werden.

Durch die Anordnung der elastischen Elemente am Anschlussstutzen kann ein geringst möglicher Platzbedarf für die elastischen Elemente realisiert werden. Hierbei übernehmen die elastischen Elemente dabei gleichzeitig eine Schwingungsdämpfung für die hydraulischen Leitungsanschlüsse und Leitungen usw. sowie auch für das gesamte hydraulische Aggregat, da die Halterung an den elastischen Elementen angeordnet ist. Vorzugsweise ist an wenigstens einem Leitungsanschlußelement oder an allen Leitungsanschlußelementen ein elastisches Element vorgesehen.

Um eine einfache Befestigungsmöglichkeit für die Halterung an dem elastischen Element vorzusehen, ist das elastische Element von einem unelastischen Band umgeben. Das unelastische Band ist beispielsweise aus Metall oder Kunststoff hergestellt.

Die Unteransprüche zeigen bevorzugte Weiterbildungen der Erfindung.

Um eine möglichst vollständige Dämpfung von Schwingungen zu ermöglichen, ist vorzugsweise an jedem Leitungsanschluss ein separates elastische Element angeordnet. Gemäß einer anderen bevorzugten Ausgestaltung der Erfindung ist ein gemeinsames elastisches Element vorgesehen, welches an jedem Leitungsanschluss Schwingungen dämpft. Dadurch ist, eine geringe Anzahl von Bauteilen notwendig. Weiterhin kann dadurch eine bestmögliche Dämpfung der Schwingungen erreicht werden, da sich die Schwingungen auch über das gemeinsame elastische Element gegenseitig aufheben können.

Um eine einfache Montage des unelastischen Bandes am elastischen Element zu ermöglichen, weist das elastische Element vorzugsweise eine umlaufende, nutförmige Ausnehmung zur Aufnahme des unelastischen Bandes auf.

Um eine gezielte Beeinflussung des Dämpfungsverhaltens des elastischen Elements bereitzustellen, sind im elastischen Element vorzugsweise Öffnungen vorgesehen. Die Öffnungen können als Durchgangsöffnungen oder als Sacklochöffnungen ausgebildet sein. Je nach Größe der einzelnen Öffnungen bzw. der Anzahl der Öffnungen bzw. der Abstände zwischen den Öffnungen können unterschiedliche Dämpfungsverhalten erreicht werden. Es ist auch denkbar, unelastische Bauteile wie z.B. Zylinderstifte in die Öffnungen einzuschieben, um unterschiedliche Schwingungsdämpfungsverhalten zu erhalten.

Um eine zusätzliche Dämpfungsmöglichkeit aufzuweisen, ist vorzugsweise zwischen der Halterung und einem Gehäuse des hydraulischen Aggregats ein zusätzliches Dämpfungselement angeordnet. Somit sind an den Leitungsanschlüssen des hydraulischen Aggregats und am Gehäuse des hydraulischen Aggregats Dämpfungselemente zur Halterung angeordnet, so dass eine bestmögliche Dämpfung aller auftretenden Schwingungen erreicht werden kann.

Besonders bevorzugt ist das elastische Element aus einem Elastomer und insbesondere aus einem Gummimaterial hergestellt.

Weiterhin bevorzugt umschließen die elastischen Elemente die Leitungsanschlüsse vollständig. Es ist jedoch auch möglich, dass die elastischen Elemente die Leitungsanschlüsse nur teilweise, z.B. zu drei Vierteln, umschließen.

Um eine einfache und direkte Befestigung des elastischen Elementes an der Halterung zu ermöglichen, ist vorzugsweise an dem umschließenden unelastischen Band ein Befestigungselement angeordnet. Das Befestigungselement kann z.B. eine am unelastischen Band befestigte Mutter sein, welche einen durch die Halterung hindurchgeführten Bolzen aufnehmen kann.

Die erfindungsgemäße Vorrichtung zur Dämpfung wird insbesondere bei hydraulischen Aggregaten in Fahrzeugen für Antiblockiersysteme (ABS), Antischlupfregelungen (ASR) und/oder elektronisches Stabilitätssysteme (ESP) verwendet.

Zeichnung

Nachfolgend wird die vorliegende Erfindung anhand der beigefügten Zeichnung beschrieben. In der Zeichnung ist:
- Figur 1: eine schematische Draufansicht eines hydraulischen Aggregats gemäß einem ersten Ausführungsbeispiel der vorliegenden Erfindung,
- Figur 2: eine schematische Seitenansicht des in Figur 1 gezeigten hydraulischen Aggregats,
- Figur 3: eine schematische, perspektivische Explosionsdarstellung eines hydraulischen Aggregats gemäß einem zweiten Ausführungsbeispiel der vorliegenden Erfindung, und
- Figur 4: eine schematische, perspektivische Ansicht des in Figur 3 gezeigten hydraulischen Aggregats im zusammengebauten Zustand.

### Beschreibung der Ausführungsbeispiele

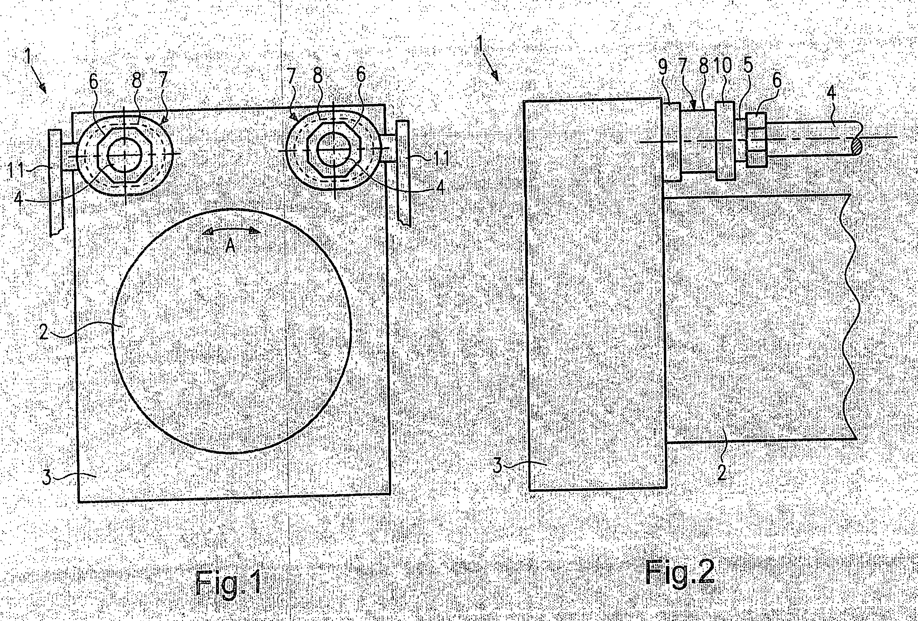

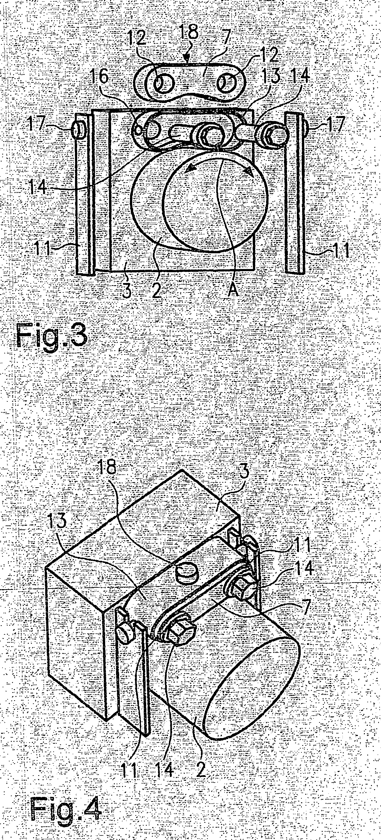

Nachfolgend wird unter Bezugnahme auf die Figuren 1 und 2 ein erstes Ausführungsbeispiel der vorliegenden Erfindung beschrieben.

Wie in Figur 1 gezeigt, umfasst das hydraulische Aggregat einen Elektromotor 2 als Antrieb und ein Gehäuse 3, in welchem die weiteren Bauteile des hydraulischen Aggregats, wie z.B. eine Pumpe und Ventile, angeordnet sind. Aus dem Gehäuse ragen zwei Anschlussstutzen 5 hervor, an welche jeweils eine Leitung 4 in Form eines Rohres oder eines Schlauches angeordnet werden kann. Die Leitungen 4 werden beispielsweise mittels Überwurfschrauben bzw. Muttern 6 am Anschlussstutzen 5 befestigt.

Um jeden Leitungsanschluss herum ist jeweils ein elastisches Element 7 angeordnet. Wie aus Figur 1 ersichtlich ist, weisen die elastischen Elemente 7 eine im Wesentlichen ovale Form auf und umgeben den Anschlussstutzen 5 des hydraulischen Aggregats 1 vollständig. Wie aus Figur 2 ersichtlich ist, weisen die elastischen Elemente 7 eine mittlere Ausnehmung 8 auf sowie einen ersten Rand 9 und einen zweiten Rand 10 auf, wobei die mittlere Ausnehmung 8 zwischen den beiden Rändern 9, 10 angeordnet ist. Die mittlere Ausnehmung 8 dient zur Aufnahme eines Metallbandes, welches umlaufend um das elastische Element 7 angeordnet ist. Eine Halterung 11 ist an dem umlaufenden Metallband befestigt. Die Halterung 11 dient zur Befestigung des gesamten hydraulischen Aggregats 1 an anderen Karosseriebauteilen des Fahrzeugs. Somit ist das hydraulische Aggregat 1 über die elastischen Elemente 7 und die Halterung 11 am Fahrzeug befestigt. Aus Gründen einer besseren Übersichtlichkeit ist die Halterung in Figur 2 nicht dargestellt.

Wenn nun Schwingungen, wie beispielsweise Körperschall, durch den Betrieb des hydraulischen Aggregats 1 erzeugt werden, werden diese Schwingungen durch die an den Leitungsanschlüssen angeordneten elastischen Elemente 7 gedämpft und absorbiert. Dadurch wird verhindert, dass die Schwingungen bzw. der Körperschall über die Halterungen 11 auf das Fahrzeug bzw. über die Leitungen auf andere Bauteile des Fahrzeugs, insbesondere in den Fahrzeuginnenraum, übertragen werden.

Zur Montage der elastischen Elemente 7 gibt es mehrere Möglichkeiten. Einerseits können die elastischen Elemente 7 vor Befestigung der Leitungen 4 auf die Leitungsanschlüsse aufgesteckt werden und anschließend die Leitungen 4 befestigt werden. Eine andere Montagemöglichkeit besteht darin, dass die elastischen Elemente 7 mit einem Schlitz versehen werden, so dass sie auch im montierten Zustand der Leitung 4 über die Leitungsanschlüsse übergezogen werden können. Das Metallband kann ebenfalls schon im Voraus am elastischen Element 7 befestigt sein oder einen Schlitz aufweisen und nachträglich am elastischen Element 7 befestigt werden. Dies kann beispielsweise mittels einer Schraubverbindung ausgeführt werden, um die beiden Enden des Metallbandes miteinander zu verbinden.

Es ist weiterhin angemerkt, dass das elastische Element 7 auch derart ausgebildet sein kann, dass es den gesamten Anschlussstutzen 5 überdeckt und zusätzlich auch die Anschlussmutter 6 zur Befestigung der Leitung 4 überdeckt. Weiterhin wäre es denkbar, dass auch ein Teil der Leitung 4 durch das elastische Element 7 überdeckt wird.

Die elastischen Elemente sind in ihrer Geometrie derart ausgelegt, dass in der Hauptbewegungsrichtung (in Figur 1 durch den Doppelpfeil A gekennzeichnet) der vom hydraulischen Aggregat 1 erzeugten Schwingungen, eine überlagerte Beanspruchung aus Druck und Scherung auftritt. Dies kann beispielsweise durch Vorsehen von Freiräumen im elastischen Element 7 auf relativ einfache Weise realisiert werden.

Somit kann erfindungsgemäß ein sehr kompakter Aufbau realisiert werden, wobei nur die elastischen Elemente 7 zur Aufnahme und Absorption der Schwingungen verwendet werden.

Nachfolgend wird unter Bezugnahme auf die Figuren 3 und 4 ein hydraulisches Aggregat 1 gemäß einem zweiten Ausführungsbeispiel der vorliegenden Erfindung beschrieben. Dabei sind gleiche bzw. funktional gleiche Teile mit den gleichen Bezugszeichen wie im ersten Ausführungsbeispiel bezeichnet.

Wie in Figur 3 gezeigt, ist im Unterschied zum ersten Ausführungsbeispiel beim zweiten Ausführungsbeispiel nur ein gemeinsames elastisches Element 7 vorgesehen. Das elastische Element 7 weist zwei Öffnungen 12 auf, welche die Anschlussstutzen des hydraulischen Aggregats 1 aufnehmen. Das elastische Element 7 weist im Wesentlichen eine Nierenform auf und ist zur einfacheren Befestigung der Halterung 11 ebenfalls mit einem Metallband 13 versehen, welches umlaufend um das elastische Element 7 angeordnet ist. Das Metallband 13 wird mittels eines Bolzens 18 am elastischen Element 7 befestigt. Das elastische Element 7 ist mittels Bolzen 14 am Gehäuse 3 befestigt. Die Bolzen 14 sind hohl und weisen ein Innengewinde 15 auf, an welchem eine Leitung (nicht dargestellt) befestigt werden kann.

Zur Befestigung der Halterung 11 sind am umlaufenden Metallband 13 Befestigungselemente 16 mit Innengewinde, z.B. Muttern, angebracht. In diese Befestigungselemente 16 werden Bolzen 17, welche durch die Halterungen 11 geführt sind, eingeschraubt. Somit ist das hydraulische Aggregat 1 über das elastische Element 7 und die Halterungen 11 an dem Fahrzeug befestigt.

Damit ermöglicht ein einziges elastisches Element 7 die Aufnahme von durch Betrieb verursachte Schwingungen des hydraulischen Aggregats sowohl am hydraulischen Aggregat selbst als auch an den zugehörigen Leitungen. Dadurch kann wirkungsvoll eine Übertragung von Schwingungen und insbesondere von Körperschall auf andere Fahrzeugteile verhindert werden. Durch die Verwendung von nur einem elastischen Element ist diese Anordnung besonders kostengünstig und montagefreundlich.

In Figur 3 ist durch den Doppelpfeil A die Hauptschwingungsrichtung des hydraulischen Aggregats 1 dargestellt, welche durch Betrieb des Elektromotors verursacht wird. Entsprechend dem im Wesentlichen zylinderförmigen Gehäuse des Elektromotors weist das elastische Element 7 die nierenförmige Ausnehmung an der zum Elektromotor gerichteten Seite auf.

Somit können durch die Verwendung eines einzigen elastischen Elements 7 wirkungsvoll Schwingungen und Körperschall gedämpft werden, wobei die Dämpfungsvorrichtung sehr kostengünstig bereitgestellt werden kann und einen sehr geringen Bauraum einnimmt.

## Patentansprüche

1. Hydraulisches Aggregat für ein Antiblockiersystem, eine Antischlupfregelung oder ein elektronisches Stabilitätssystem eines Fahrzeugs umfassend ein Gehäuse (3) mit einem vorstehenden Anschlussstutzen (5) und eine Vorrichtung zur Dämpfung von Schwingungen dieses hydraulischen Aggregats (1), wobei die Vorrichtung ein elastisches Element (7) aufweist, das mit einer Halterung (11) zur Befestigung des hydraulischen Aggregats (1) im Fahrzeug verbunden ist,
**dadurch gekennzeichnet,**
**dass** das elastische Element (7) den Anschlussstutzen (5) umgibt und am Gehäuse (3) anliegt
und **dass** das elastische Element (7) von einem unelastischen Band (13) umgeben ist.

2. Hydraulisches Aggregat nach Anspruch 1, **dadurch gekennzeichnet, dass** mehrere Anschlussstutzen (5) vorgesehen sind und dass an jedem Anschlussstutzen (5) ein separates elastisches Element (7) angeordnet ist.

3. Hydraulisches Aggregat nach Anspruch 1, **gekennzeichnet durch** ein gemeinsames elastisches Element (7) für alle vorhandenen Anschlussstutzen (5) des hydraulischen Aggregats.

4. Hydraulisches Aggregat nach Anspruch 1, **dadurch gekennzeichnet, dass** das elastische Element (7) eine umlaufende Ausnehmung (8) zur Aufnahme des unelastischen Bandes (13) aufweist.

5. Hydraulisches Aggregat nach einem der vorhergehenden Ansprüche, **dadurch gekennzeichnet, dass** das elastische Element (7) Öffnungen zur gezielten Beeinflussung des Dämpfungsverhaltens des elastischen Elements (7) aufweist.

6. Hydraulisches Aggregat nach einem der vorhergehenden Ansprüche, **dadurch gekennzeichnet, dass** zwischen der Halterung (11) und dem Gehäuse des hydraulischen Aggregats (1) ein zusätzliches Dämpfungselement angeordnet ist.

7. Hydraulisches Aggregat nach einem der vorhergehenden Ansprüche, **dadurch gekennzeichnet, dass** das elastische Element (7) aus einem Gummimaterial hergestellt ist.

8. Hydraulisches Aggregat nach einem der vorhergehenden Ansprüche, **dadurch gekennzeichnet, dass** das elastische Element (7) die Anschlussstutzen (5) vollständig umschließt.

9. Hydraulisches Aggregat nach einem der vorhergehenden Ansprüche, **dadurch gekennzeichnet, dass** am unelastischen Band (13) Befestigungselemente (16) zur Befestigung der Halterung (11) angeordnet sind.

## Claims

1. Hydraulic unit for an anti-lock brake system, a traction control system or an electronic stability system of a vehicle, comprising a housing (3) with a protruding connection piece (5) and an apparatus for damping oscillations of this hydraulic unit (1), the apparatus having an elastic element (7) which is connected to a holding device (11) for fastening the hydraulic unit (1) in the vehicle, **characterized in that** the elastic element (7) surrounds the connection piece (5) and bears against the housing (3), and **in that** the elastic element (7) is surrounded by a non-elastic strap (13).

2. Hydraulic unit according to Claim 1, **characterized in that** a plurality of connection pieces (5) are provided, and **in that** a separate elastic element (7) is arranged on each connection piece (5).

3. Hydraulic unit according to Claim 1, **characterized by** a common elastic element (7) for all connection pieces (5) of the hydraulic unit which are present.

4. Hydraulic unit according to Claim 1, **characterized in that** the elastic element (7) has a circumferential recess (8) for holding the non-elastic strap (13).

5. Hydraulic unit according to one of the preceding claims, **characterized in that** the elastic element (7) has openings for the targeted influencing of the damping behaviour of the elastic element (7).

6. Hydraulic unit according to one of the preceding claims, **characterized in that** an additional damping element is arranged between the holding device (11) and the housing of the hydraulic unit (1).

7. Hydraulic unit according to one of the preceding claims, **characterized in that** the elastic element (7) is manufactured from a rubber material.

8. Hydraulic unit according to one of the preceding claims, **characterized in that** the elastic element (7) completely encloses the connection pieces (5).

9. Hydraulic unit according to one of the preceding claims, **characterized in that** fastening elements (16) for fastening the holding device (11) are arranged on the non-elastic strap (13).

## Revendications

1. Unité hydraulique pour un système antiblocage (ABS), pour un dispositif antipatinage ou pour un système de stabilité électronique d'un véhicule, comprenant un boîtier (3) avec un raccord (5) en saillie et un dispositif d'amortissement des vibrations de cette unité hydraulique (1), dispositif présentant un élément élastique (7) relié à un support (11) pour fixer l'unité hydraulique (11) dans le véhicule,
**caractérisée en ce que**
l'élément élastique (7) entoure le raccord (5) et se trouve sur le boîtier (3), et l'élément élastique (7) est entouré par une bande (13) non élastique.

2. Unité hydraulique selon la revendication 1,
**caractérisée en ce que**
plusieurs raccords (5) sont prévus avec un élément élastique séparé (7) sur chaque raccord (5).

3. Unité hydraulique selon la revendication 1,
**caractérisée par**
un élément élastique commun (7) pour tous les raccords (5) existants de l'unité hydraulique.

4. Unité hydraulique selon la revendication 1,
**caractérisée en ce que**
l'élément élastique (7) présente un évidement (8) périphérique pour loger la bande non élastique (13).

5. Unité hydraulique selon l'une quelconque des revendications précédentes,
**caractérisée en ce que**
l'élément élastique (7) présente des orifices pour influencer de manière ciblée le comportement d'amortissement de l'élément élastique (7).

6. Unité hydraulique selon l'une quelconque des revendications précédentes,
**caractérisée par**
un élément amortisseur supplémentaire entre le support (11) et le boîtier de l'unité hydraulique (1).

7. Unité hydraulique selon l'une quelconque des revendications précédentes,
**caractérisée en ce que**
l'élément élastique (7) est en caoutchouc.

8. Unité hydraulique selon l'une quelconque des revendications précédentes,
**caractérisée en ce que**
l'élément élastique (7) entoure complètement les raccords (5).

9. Unité hydraulique selon l'une quelconque des revendications précédentes,
**caractérisée en ce que**
la bande non élastique (13) comporte des éléments de fixation (16) pour fixer le support (11).
